# EUROPEAN PATENT SPECIFICATION

(11) **EP 4 145 561 B1**
(45) Date of publication and mention of the grant of the patent: **11.09.2024**
(21) Application number: 21797917.8
(22) Date of filing: 22.04.2021
(51) Int. Cl.: H01M 4/13, H01M 4/62, H01M 10/42, H01M 4/66, H01M 4/139, H01M 4/04, H01M 10/052, H01M 10/0585, H01M 4/02, H01M 4/134, H01M 4/1395, H01M 4/36, H01M 4/38, H01M 4/485, H01M 10/0525

(54) **NEGATIVE ELECTRODE FOR LITHIUM SECONDARY BATTERY HAVING CURRENT COLLECTOR OXIDIZED THEREIN, AND METHOD FOR MANUFACTURING SAME**
NEGATIVELEKTRODE FÜR LITHIUM-SEKUNDÄRBATTERIE MIT DARIN OXIDIERTEM STROMKOLLEKTOR UND VERFAHREN ZU DEREN HERSTELLUNG
ÉLECTRODE NÉGATIVE POUR BATTERIE SECONDAIRE AU LITHIUM AYANT UN COLLECTEUR DE COURANT OXYDÉ DANS CELLE-CI, ET SON PROCÉDÉ DE FABRICATION

(30) Priority: 27.04.2020 KR 20200050794
(43) Date of publication of application: 08.03.2023
(73) Proprietor: LG Energy Solution, Ltd., Seoul 07335 (KR)
(72) Inventor: LEE, Jung Pil, Daejeon 34122 (KR); HAN, Gi Beom, Daejeon 34122 (KR); LEE, Dong Chan, Daejeon 34122 (KR)
(74) Representative: Goddar, Heinz J.
(86) International application number: PCT/KR2021/005120
(87) International publication number: WO 2021/221388

(56) References cited:
- WO-A1-2018/210791
- WO-A1-2019/165412
- KR-A- 20180 091 678
- KR-A- 20190 013 630
- KR-B1- 100 425 585
- TAN LEI ET AL: "Oxygen-induced lithiophilicity of tin-based framework toward highly stable lithium metal anode", CHEMICAL ENGENEERING JOURNAL, ELSEVIER, AMSTERDAM, NL, vol. 394, 124848, 22 March 2020 (2020-03-22), pages 1 - 7, XP086186959, ISSN: 1385-8947, [retrieved on 20200322], DOI: 10.1016/J.CEJ.2020.124848
- JIANG YUNPENG ET AL: "In situ growth of CuO submicro-sheets on optimized Cu foam to induce uniform Li deposition and stripping for stable Li metal batteries", ELECTROCHIMICA ACTA, ELSEVIER, AMSTERDAM, NL, vol. 339, 22 February 2020 (2020-02-22), XP086125471, ISSN: 0013-4686, [retrieved on 20200222], DOI: 10.1016/J.ELECTACTA.2020.135941
- WU SHUILIN ET AL: "Lithiophilicity conversion of carbon paper with uniform Cu2+1O coating: Boosting stable Li-Cu2+1O-CP composite anode through melting infusion", CHEMICAL ENGENEERING JOURNAL, vol. 388, 28 January 2020 (2020-01-28), AMSTERDAM, NL, pages 124238, XP093025316, ISSN: 1385-8947, DOI: 10.1016/j.cej.2020.124238
- WU KAI ET AL: "ZnCo2O4/ZnO induced lithium deposition in multi-scaled carbon/nickel frameworks for dendrite-free lithium metal anode", JOURNAL OF ENERGY CHEMISTRY, ELSEVIER, AMSTERDAM, NL, vol. 43, 25 July 2019 (2019-07-25), pages 16 - 23, XP085926298, ISSN: 2095-4956, [retrieved on 20190725], DOI: 10.1016/J.JECHEM.2019.07.010
- FEI ZHAOA, , XUFENG ZHOUA , WEI DENGA , ZHAOPING LIU: "Entrapping lithium deposition in lithiophilic reservoir constructed by vertically aligned ZnO nanosheets for dendrite-free Li metal anodes", NANO ENERGY, vol. 62, 1 August 2019 (2019-08-01), NL, pages 55 - 63, XP055863226, ISSN: 2211-2855, DOI: 10.1016/j.nanoen.2019.04.087

## Description

### [Technical Field]

The present invention relates to a negative electrode for lithium secondary batteries including an oxidized current collector and a method of manufacturing the same, and more particularly to a negative electrode for lithium secondary batteries configured such that a lithiophilic material is introduced to the surface of a negative electrode current collector in order to enlarge the portion of the surface of the negative electrode current collector on which lithium plating occurs, whereby it is possible to prevent lithium dendrites from being formed at a specific portion of the negative electrode, and a method of manufacturing the same.

### [Background Art]

A lithium secondary battery, which is reusable and has high energy density, has attracted attention as a new energy source that has environmentally friendly characteristics, since the lithium secondary battery not only remarkably reduces the use of fossil fuels but also does not generate by-products as the result of the use of energy.

The lithium secondary battery has been spotlighted as a power source that has high energy density suitable for wearable devices or portable devices and as a high-output power source for electric vehicles. As a result, research on a lithium secondary battery that has high operating voltage and energy density has been more actively conducted.

The operating voltage and energy density of the lithium secondary battery may be changed depending on the kind of an electrode active material, the kind of an electrolytic solution, and the loading amount of an electrode mixture layer. A lithium cobalt composite oxide or a lithium-containing manganese composite oxide is used as a positive electrode active material, and lithium metal, a carbon-based material, or silicon is used as a negative electrode active material. The lithium metal has an advantage of high energy density but has a problem in that, when lithium metal reacts with moisture in air, by-products, such as LiOH, Li₂O, and Li₂CO₃, are generated.

By-products generated as the result of the lithium metal reacting with the electrolytic solution may considerably deteriorate performance of the battery and may cause internal short circuit.

Furthermore, in the case in which the lithium metal is used as a negative electrode, lithium dendrites are formed on the surface of the lithium metal during charging and discharging of the battery. In the case in which the lithium dendrites grow and penetrate a separator, the lifespan of the lithium secondary battery may be reduced and a fatal problem related to safety may occur. For example, microscopic short circuit may occur.

Patent Document 1 discloses a lithium polymer secondary battery configured such that a cross-linking polymer protective thin film using a diacrylic-based monomer is formed on the surface of lithium metal in order to improve safety of a lithium metal negative electrode, whereby it is possible to improve interface characteristics between the lithium metal electrode and a polymer electrolyte.

Since the protective thin film is easily peeled from the surface of the electrode as the result of driving of the battery, however, it is difficult to sufficiently obtain a lithium dendrite growth prevention effect.

Patent Document 2 discloses an electrode for lithium secondary batteries including an electrode active material layer including lithium metal between a current collector and a protective layer, the protecting layer including a thermally conductive material, wherein heat is uniformly distributed on the surface of the electrode during charging and discharging, whereby lithium dendrites uniformly grow.

Nevertheless, Patent Document 2 does not solve a problem in that lithium dendrites grow on the surface of a negative electrode that faces a positive electrode, whereby microscopic short circuit occurs. As described above, the lithium metal negative electrode has still not been applied to the related fields due to growth of lithium dendrites in spite of advantages of high energy density and high voltage

### (Prior Art Documents)

(Patent Document 1) Korean Registered Patent Publication No. 0425585 (2004.03.22)
(Patent Document 2) Korean Patent Application Publication No. 2019-0013630 (2019.02.11)

Tan Lei et al. "Oxygen-induced lithiophilicity of tin-based framework toward highly stable lithium metal anode", Chemical Engineering Journal, 394, 2020, 124848; relates to a lithiophilic framework (CP/Sn/SnO₂) as Li storage host for stable Li metal anode by introducing oxygen as a type of SnO₂ into a Sn and carbon paper (CP) composite.

Jiang Yunpeng et al., "In situ growth of CuO submicro-sheets on optimized Cu foam to induce uniform Li deposition and stripping for stable Li metal batteries", Electrochimica Acta, Elsevier, vol. 339, 2020, 135941; discloses a pathway to CuO as a lithiophilic material on a copper current collector by treatment with NH₃.

Wu Shuilin et al., "Lithiophilicity conversion of carbon paper with uniform Cu2+1O coating: Boosting stable Li-Cu2+1O-CP composite anode though melting infusion", Chemical Engineering Journal, 388, 2020, 124238; discloses the fabrication of a Li-Cu₂₊₁O-CP composite anode that is formed by coating carbon paper with Cu through magneton sputtering followed by oxidizing the Cu with an annealing process in static air.

Wu Kai et al., "ZnCo2O4/ZnO induced lithium deposition in multi-scaled carbon/nickel frameworks for dendrite-free lithium metal anode", J. of Energy Chemistry, vol. 43, 2019, pp 16-23 uses zinc nitrate and cobalt nitrate in order to form a ZnCo₂O₄/ZnO layer on a composite lithium host.

WO 2018/210791 A1 relates to a method for producing a substrate (2) which is coated with an alkali metal (1), in which method a promoter layer (3) which is composed of a material which reacts with the alkali metal (1) by at least partial chemical reduction of the promoter layer (3) is applied to a surface of the substrate (2) and a surface of the promoter layer (3) is acted on by an alkali metal ( 1) and then the alkali metal ( 1) is converted into the solid phase and a coating containing the alkali metal is formed.

Zhao, F. et al., "Entrapping lithium deposition in lithiophilic reservoir constructed by vertically aligned ZnO nanosheets for dendrite-free Li metal anodes", Nano Energy, vol. 62, 2019, pp. 55-63 ; discloses an anode for a lithium secondary battery comprising nickel foam and lithiophilic ZnO nanosheets formed on the surface of the nickel foam.

WO 2019/165412 A1 discloses an anode for a lithium-based energy storage device such as a lithium-ion battery including an electrically conductive current collector comprising a metal oxide layer and a continuous porous lithium storage layer provided over the metal oxide layer. The continuous porous lithium storage layer includes at least 40 atomic% silicon, germanium or a combination thereof.

KR 2018 0 091 678 A provides a negative electrode for an all solid state secondary battery using metal lithium as a negative electrode. The negative electrode includes a negative electrode current collector; and a coating layer which covers the negative electrode current collector and is capable of extracting metal lithium through a lithium alloy layer allowing the rapid diffusion of lithium at the time of charging.

KR 100 425 585 B1 discloses a lithium metal secondary battery comprising a lithium metal cathode, a crosslinked polymer protective thin film formed on the surface of the lithium metal negative electrode, and a gelated polymer electrolyte layer formed on the crosslinked polymer protecting thin film.

KR 2019 0 013 630 A relates to an electrode for a lithium secondary battery including a protective layer and a lithium secondary battery including the same. The protective layer includes a thermal conductive material.

### [Disclosure]

### [Technical Problem]

The present invention has been made in view of the above problems, and it is an object of the present invention to provide a negative electrode for lithium secondary batteries configured such that a coating material coated on a negative electrode current collector is oxidized in order to prevent occurrence of short circuit as the result of lithium dendrites that grow on a specific portion of the surface of the negative electrode coming into contact with a positive electrode and a method of manufacturing the same.

### [Technical Solution]

In order to accomplish the above object, a negative electrode for lithium secondary batteries according to the present invention includes a negative electrode current collector and a lithiophilic material (LPM) coated on at least one surface of the negative electrode current collector in a dispersed state, wherein the lithiophilic material is an oxidized product of the coating material coated on the negative electrode current collector and includes at least one of a metal or a metal oxide, and an oxide layer is formed on a surface of the negative electrode current collector while the lithiophilic material is formed thereon, wherein the coating material is at least one of: a metal salt comprising HAuCl₄, H₂PtCl₆, AgNO₂, AuCl, Aucl₃, K(AuCl₄), AuBr₃, PtCl₂, PtCl₄, AgCl, or AgCN; a metal comprising Au, Ag, or Pt; and wherein the lithiophilic material is at least one of: a metal comprising Au, Ag, or Pt.

Lithium plating (Li plating) may occur on the lithiophilic material.

The coating material is at least one of: a metal salt including HAuCl₄, H₂PtCl₆, AgNO₃, AuCl, Aucl₃, K(AuCl₄), AuBr₃, PtCl₂, PtCl₄, AgCl, or AgCN; a metal including Au, Ag, or Pt.

The lithiophilic material is at least one of: a metal including Au, Ag, or Pt.

An oxide layer is formed on the surface of the negative electrode current collector that is not coated with the lithiophilic material.

In addition, the present invention provides a method of manufacturing the negative electrode. Specifically, the method includes 1) preparing a negative electrode current collector, 2) coating at least one surface of the negative electrode current collector with a coating material in a dispersed state, and 3) oxidizing the negative electrode current collector and the coating material of step 2).

Lithiophilicity of the coating material may be increased by the oxidation.

The coating step may be performed by immersing, spin coating, dip coating, spray coating, doctor blade coating, solution casting, drop coating, physical vapor deposition (PVD), or chemical vapor deposition (CVD).

The oxidation may be performed through a heat treatment process at a temperature of 50°C to 500°C.

The oxidation may be performed for 1 minute to 360 minutes.

In addition, the present invention provides an electrode assembly including the negative electrode.

The electrode assembly may be a mono-cell in which a positive electrode, a separator, and a negative electrode are sequentially stacked, or a bi-cell in which a negative electrode, a separator, a positive electrode, a separator, and a negative electrode are sequentially stacked.

The electrode assembly may include a negative electrode for lithium secondary batteries configured such that opposite surfaces of a negative electrode current collector are coated with lithiophilic materials.

Alternatively, the electrode assembly may include a negative electrode current collector, a first surface of which is coated with a lithiophilic material and a second surface of which is coated with no lithiophilic material, wherein the second surface may be disposed so as to face a positive electrode in the state in which a separator is interposed therebetween.

In addition, the present invention provides a lithium secondary battery having the electrode assembly received in a battery case together with an electrolytic solution or a solid electrolyte. In addition, the present invention provides a battery module or a battery pack including the lithium secondary battery as a unit cell.

### [Advantageous Effects]

As is apparent from the above description, in a negative electrode for lithium secondary batteries including an oxidized current collector according to the present invention and a method of manufacturing the same, the entire surface of a negative electrode current collector is coated with a lithiophilic material in a dispersed state, whereby lithium plating may occur over the entire surface of the negative electrode current collector. Consequently, nucleation potential is lowered and a plurality of lithium nuclei may be formed.

In addition, since the lithiophilic material is widely distributed, a rate at which additional plating occurs on a plurality of lithium nuclei widely dispersed may be increased, compared to a rate at which a lithium nucleus grows on a specific region of the surface of the negative electrode current collector in a vertical direction. Consequently, it is possible to prevent local occurrence of lithium plating on the surface of the negative electrode current collector, thus preventing growth of lithium dendrites.

In addition, since the portion of the negative electrode current collector that is coated with no lithiophilic material is oxidized, the surface of the negative electrode current collector that is coated with no lithiophilic material is reformed so as to be lithiophilic. Consequently, it is possible to further inhibit local occurrence of lithium plating.

### [Description of Drawings]

FIG. 1 is a photograph showing a surface of a negative electrode manufactured according to Example 1.
FIG. 2 is a SEM photograph of the negative electrode manufactured according to Example 1.
FIG. 3 is a SEM photograph of a negative electrode manufactured according to Example 2.
FIG. 4 is a SEM photograph of a negative electrode manufactured according to Example 3.
FIG. 5 is a photograph showing a surface of a negative electrode manufactured according to Comparative Example 1.
FIG. 6 is a SEM photograph of the negative electrode manufactured according to Comparative Example 1.
FIG. 7 is a photograph showing a surface of a negative electrode manufactured according to Comparative Example 2.
FIG. 8 is a SEM photograph of the negative electrode manufactured according to Comparative Example 2.
FIG. 9 is a photograph showing a surface of a negative electrode manufactured according to Comparative Example 3.
FIG. 10 is a photograph showing a surface of a negative electrode manufactured according to Comparative Example 4.
FIG. 11 is a photograph showing a surface of a negative electrode manufactured according to Comparative Example 5.

### [Best Mode]

Now, preferred embodiments of the present invention will be described in detail with reference to the accompanying drawings such that the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims, singular forms are intended to include plural forms unless mentioned otherwise.

Also, in the description of the invention and the claims, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

A negative electrode for lithium secondary batteries including lithium metal according to the present invention includes a negative electrode current collector and a lithiophilic material (LPM) coated on at least one surface of the negative electrode current collector in a dispersed state, wherein the lithiophilic material, which is an oxidized product of the coating material coated on the negative electrode current collector, includes at least one of a metal or a metal oxide, and an oxide layer is formed on a surface of the negative electrode current collector while the lithiophilic material is formed thereon, wherein the coating material is at least one of: a metal salt comprising HAuCl₄, H₂PtCl₆, AgNO₃, AuCl, Aucl₃, K(AuCl₄), AuBr₃, PtCl₂, PtCl₄, AgCl, or AgCN; a metal comprising Au, Ag, or Pt; and wherein the lithiophilic material is at least one of: a metal comprising Au, Ag, or Pt.

The coating material itself is a material that exhibits lithiophilicity or is a material that exhibits no lithiophilicity before oxidation but is configured such that an oxidized product of the coating material generated as the result of oxidation exhibits lithiophilicity.

In the case in which the coating material itself is a material that exhibits lithiophilicity, lithiophilicity may be further increased through oxidation. Alternatively, contrary thereto, improvement in lithiophilicity through oxidation may be insignificant.

In addition, the negative electrode current collector is in the state in which an oxide layer is formed on the surface of the negative electrode current collector by oxidation. As the result of formation of the oxide layer, the negative electrode current collector is denatured so as to exhibit lithiophilicity. Specifically, in the case in which the negative electrode current collector is made of a copper material, lithiophilicity may be further increased by a copper oxide layer formed by oxidation.

The coating material is at least one of: a metal salt including HAuCl₄, H₂PtCl₆, AgNO₃, AuCl, AuCl₃, K(AuCl₄), AuBr₃, PtCl₂, PtCl₄, AgCl, or AgCN; or a metal including Au, Ag, Pt.

Specifically, the metal salt may be nitrate and chloride.

The lithiophilic material, which is an oxidized product of the coating material coated on the negative electrode current collector, is at least one of: a metal including Au, Ag, or Pt.

A metal included in the lithiophilic material is reduced after becoming a metal oxide by oxidation, since the metal has a nature of not being easily oxidized, and may be in the same state as the coating material before oxidation. In the case in which a metal is included in the coating material, therefore, the effect of improvement in lithiophilicity due to oxidation may be low.

Since the metal corresponds to the lithiophilic material, however, lithium is plated on the metal.

Meanwhile, among the above metals, metals that are not easily oxidized in spite of oxidation are noble metals, whereby material costs may be increased. Particularly, in the case in which the particle size of the noble metal is small, costs may be further increased, since further processing costs are needed. For this reason, the noble metal may be acquired using the metal salt. It is possible to reduce material costs by using the metal salt as the coating material.

Even in the case in which a metal oxide is included in the coating material, a difference in lithiophilicity due to oxidation is small, since the metal oxide is in an oxide state.

In the case in which a metal salt is included in the coating material, however, the metal salt is changed to a metal that exhibits lithiophilicity as the result of oxidation, whereby a difference in lithiophilicity before and after oxidation may be large.

The negative electrode current collector may include copper, nickel, stainless steel, aluminum, or an alloy thereof.

Specifically, the negative electrode current collector may be foil made of copper, nickel, stainless steel, aluminum, lithium, or an alloy thereof. A negative electrode may be manufactured by forming a negative electrode mixture on the negative electrode current collector by coating and drying and rolling the negative electrode mixture.

Generally, in the case in which lithium metal is used for the negative electrode, the negative electrode has advantages of high energy density and high output. The lithium metal, which is lithium in a metal state, means pure lithium, which is not alloyed with a metal other than lithium. However, the lithium metal may form a lithium nucleus on the surface of the negative electrode, and the lithium nucleus may grow into lithium dendrites. There is a high danger of the lithium dendrites penetrating a separator, whereby internal short circuit may occur.

Consequently, the present invention provides a negative electrode, the surface of which is coated with a lithiophilic material through a method of oxidizing a negative electrode current collector having a coating layer formed thereon, whereby lithium plating occurs over the entire surface of the negative electrode current collector.

Specifically, the lithiophilic material is a material that has high reactivity with lithium, and lithium plating (Li plating) occurs on the lithiophilic material. In the present invention, the surface of the negative electrode current collector is coated with a coating material that becomes the lithiophilic material, and the coating material is oxidized. The lithiophilic material lowers nucleation potential on the surface of the negative electrode current collector such that a plurality of lithium nuclei is formed. That is, a rate at which additional plating occurs on a plurality of lithium nuclei widely dispersed may be increased, compared to a rate at which a lithium nucleus grows on a specific region of the surface of the negative electrode current collector in a vertical direction, whereby it is possible to prevent growth of lithium dendrites on a specific portion of the surface of the negative electrode current collector in the vertical direction.

Also, in the present invention, the negative electrode current collector coated with the coating material is oxidized, whereby lithiophilicity of the lithiophilic material, which is an oxidized product of the coating material, is improved, and the portion of the negative electrode current collector that is not coated with the lithiophilic material is oxidized, whereby a metal oxide layer that exhibits lithiophilicity is formed. Lithium plating may occur over the entire surface of the negative electrode current collector by such oxidation.

The negative electrode current collector may be configured in any of various forms, such as a film, a sheet, a foil, a net, a porous body, a foam body, and a non-woven fabric body, each of which has a micro-scale uneven pattern formed on the surface thereof or each of which has no micro-scale uneven pattern formed on the surface thereof.

Although the thickness of the negative electrode current collector is not particularly restricted, the thickness of the negative electrode current collector is preferably 5 um to 30 µm, more preferably 10 um to 20 um. If the thickness of the negative electrode current collector is greater than 30 µm, the capacity of the electrode per volume may be reduced. If the thickness of the negative electrode current collector is less than 5 um, a folding phenomenon may occur at the time of manufacture of the electrode.

In the present invention, an electrode active material layer may be optionally included. That is, the negative electrode according to the present invention may include only a negative electrode current collector coated with a lithiophilic material without inclusion of a negative electrode active material layer or may include a foil type negative electrode current collector and a negative electrode active material layer.

The negative electrode active material may include at least one selected from the group consisting of a carbon material, a lithium alloy, a lithium metal composite oxide, lithium-containing titanium composite oxide (LTO), and a combination thereof. Here, the lithium alloy includes an element capable of being alloyed with lithium, and mention of Si, Sn, C, Pt, Ir, Ni, Cu, Ti, Na, K, Rb, Cs, Fr, Be, Mg, Ca, Sr, Sb, Pb, In, Zn, Ba, Ra, Ge, or Al may be made as the element capable of being alloyed with the lithium.

The thickness of the negative electrode active material layer may be 5 um to 40 µm, more specifically 10 um to 20 µm.

In the present invention, a method of forming the negative electrode active material layer on the negative electrode current collector is not particularly restricted, and a method known in the art may be used. For example, the negative electrode active material layer may be formed on the negative electrode current collector by dry or wet deposition or coating.

The lithiophilic material is located on the negative electrode current collector in a state of being dispersed over the negative electrode current collector. Alternatively, the lithiophilic material may be agglutinated so as to be disposed in an island shape such that the negative electrode current collector is partially exposed.

In a concrete example, the lithiophilic material may be distributed within a range of 5% to 100%, specifically a range of 10% to 90%, more specifically a range of 30% to 80%, of the total area of the negative electrode current collector. In addition, more specifically, the lithiophilic material may be distributed within a range of 50% to 70% of the total area of the negative electrode current collector.

In the case in which the area of the lithiophilic material is less than 5% of the total area of the negative electrode current collector, the distribution area of the lithiophilic material is small, whereby it is difficult to obtain the effect provided by the lithiophilic material, which is undesirable. In the case in which the area of the lithiophilic material is greater than 100% of the total area of the negative electrode current collector, which means introduction of surplus lithiophilic material, energy density is reduced, which is undesirable.

However, the present invention is characterized in that the entirety of the negative electrode current collector is oxidized, whereby the portion of the negative electrode current collector that is not coated with the lithiophilic material is also reformed so as to be lithiophilic. When compared with the case in which the same lithiophilic material coating area is provided and the negative electrode current collector is not oxidized, therefore, lithium plating may occur on a larger region, whereby it is possible to further improve the effect of preventing lithium plating from occurring locally on the surface of the negative electrode current collector.

In a concrete example, in the case in which a copper current collector is used as the negative electrode current collector, a metal oxide layer formed on the surface of the negative electrode current collector by oxidation may be copper oxide, and, as the result of formation of the copper oxide, lithiophilicity is higher than in the copper current collector before oxidation

The present invention provides a method of manufacturing the negative electrode for lithium secondary batteries. Specifically, the method of manufacturing the negative electrode for lithium secondary batteries includes a step of preparing a negative electrode current collector, a step of coating at least one surface of the negative electrode current collector with a coating material in a dispersed state, and a step of oxidizing the negative electrode current collector and the coating material.

A lithiophilic material coating method is not particularly restricted. For example, immersing, spin coating, dip coating, spray coating, doctor blade coating, solution casting, drop coating, physical vapor deposition (PVD), or chemical vapor deposition (CVD) may be used.

Oxidation may be performed through a heat treatment process at a temperature of 50°C to 500°C. Specifically, oxidation may be performed at a temperature of 80°C to 400°C. More specifically, oxidation may be performed at a temperature of 150°C to 300°C.

In the case in which oxidation temperature is lower than 50°C, oxidation time is excessively lengthened, whereby processability is deteriorated, which is undesirable. In the case in which oxidation temperature is higher than 500°C, it is difficult to adjust the degree of oxidation, which is also undesirable.

The oxidation time may range from 1 minute to 360 minutes, specifically from 5 minutes to 180 minutes, more specifically from 10 minutes to 60 minutes.

In the case in which the oxidation time is shorter than 1 minute, it is difficult to adjust the degree of oxidation, which is undesirable. In the case in which the oxidation time is longer than 360 minutes, processability is deteriorated due to such long oxidation time, which is also undesirable.

Since the oxidation temperature and the oxidation time are factors that are related to each other, however, the oxidation temperature and the oxidation time may be adjusted. For example, the oxidation time may be set to be short in the case in which the oxidation temperature is high, and the oxidation time may be set to be long in the case in which the oxidation temperature is low.

For example, when heat treatment is performed at 100°C, a time duration of 1 hour or more may be needed in order to obtain the same effect as in the case in which oxidation is performed at 300°C for 1 hour.

The present invention provides an electrode assembly including the negative electrode for lithium secondary batteries. In the electrode assembly, a negative electrode current collector of the negative electrode for lithium secondary batteries includes a first surface coated with a lithiophilic material and a second surface coated with no lithiophilic material, wherein the second surface is disposed so as to face a positive electrode in the state in which a separator is interposed therebetween.

The positive electrode is manufactured, for example, by applying a positive electrode mixture including a positive electrode active material to a positive electrode current collector and drying the positive electrode mixture. The positive electrode mixture may further optionally include a binder, a conductive agent, and a filler, as needed.

The positive electrode current collector is not particularly restricted, as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion of the positive electrode active material. The positive electrode current collector may be configured in various forms, such as a film, a sheet, a foil, a net, a porous body, a foam body, and a non-woven fabric body.

The positive electrode active material is a material that is capable of inducing an electrochemical reaction. The positive electrode active material may be a lithium transition metal oxide including two or more transition metals. For example, the positive electrode active material may be, but is not limited to, a layered compound, such as a lithium cobalt oxide (LiCoO₂) or a lithium nickel oxide (LiNiO₂) substituted with one or more transition metals; a lithium manganese oxide substituted with one or more transition metals; a lithium nickel-based oxide represented by the chemical formula LiNi_{1-y}M_{y}O₂ (where M = Co, Mn, Al, Cu, Fe, Mg, B, Cr, Zn, or Ga, at least one of which is included, and 0.01≤y≤0.7); a lithium nickel cobalt manganese composite oxide represented by the chemical formula Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl), such as Li_{1+z}Ni_{1/3}Co_{1/3}Mn_{1/3}O₂ or Li_{1+z}Ni_{0.4}Mn_{0.4}Co_{0.2}O₂; or olivine-based lithium metal phosphate represented by the chemical formula Li₁₊ₓM_{1-y}M'_{y}PO_{4-z}X_{z} (where M = a transition metal, preferably Fe, Mn, Co, or Ni, M' = Al, Mg, or Ti, X = F, S, or N, -0.5≤x≤0.5, 0≤y≤0.5, and 0≤z≤0.1).

The conductive agent is generally added so that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, carbon; graphite, such as natural graphite or artificial graphite; carbon black, such as acetylene black, Ketjen black, channel black, furnace black, lamp black, or summer black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive materials, such as a polyphenylene derivative, may be used as the conductive agent.

The binder is a component assisting in binding between the active material and the conductive agent and in binding with the current collector. The binder is generally added in an amount of 1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, styrene butadiene rubber, fluoro rubber, and various copolymers thereof.

The filler is an optional component used to inhibit expansion of the electrode. There is no particular limit to the filler, as long as the filler is made of a fibrous material while the filler does not cause chemical changes in a battery to which the filler is applied. As examples of the filler, there may be used olefin-based polymers, such as polyethylene and polypropylene; and fibrous materials, such as glass fiber and carbon fiber.

The electrode assembly according to the present invention includes a separator interposed between the positive electrode and the negative electrode.

A thin insulative film that exhibits high ionic permeability and mechanical strength may be used as the separator. For example, the separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate or a mixture of two or more thereof.

Hereinafter, the present invention will be described with reference to the following examples. These examples are provided only for easier understanding of the present invention and should not be construed as limiting the scope of the present invention.

### Manufacture of negative electrode

### <Example 1>

A copper current collector and a coating solution including a coating material were prepared, the coating solution was dropped onto the copper current collector, and spin coating was performed at 3,000 rpm for 1 minute to form a coating layer.

A solution in which HAuCl₄ was dissolved in ethanol so as to have a concentration of 10 mg/ml was used as the coating solution.

The negative electrode current collector coated with the coating solution was thermally treated at 300°C for 60 minutes to manufacture a negative electrode in which the copper current collector and the coating material were oxidized.

Not only the portion of the negative electrode current collector coated with the coating material but also the portion of the negative electrode current collector coated with no coating material was reformed so as to be lithiophilic through such a method.

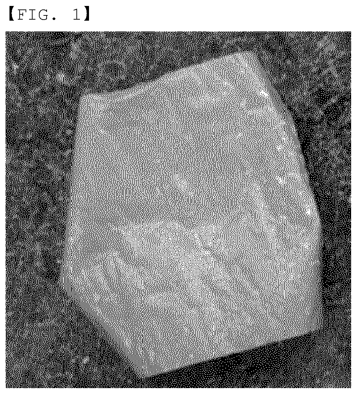

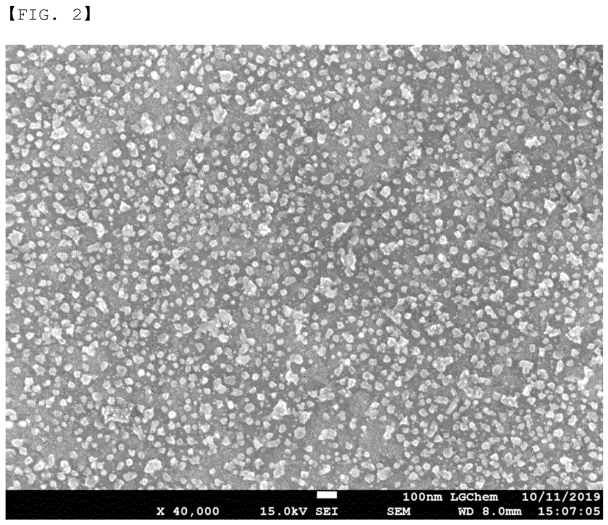

A photograph of the surface of the negative electrode manufactured according to Example 1 is shown in FIG. 1, and an SEM photograph of the negative electrode is shown in FIG. 2.

### <Example 2>

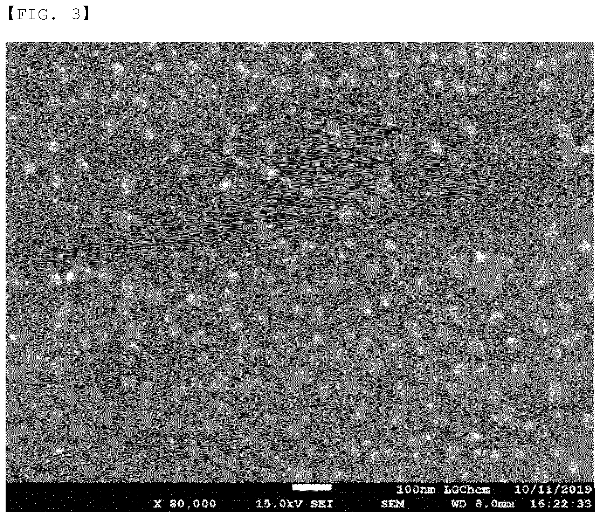

A negative electrode was manufactured using the same method as in Example 1 except that HAuCl₄ in the coating solution was changed to H₂PtCl₆ in Example 1. A photograph of the surface of the negative electrode manufactured according to Example 2 is shown in FIG. 3.

### <Example 3>

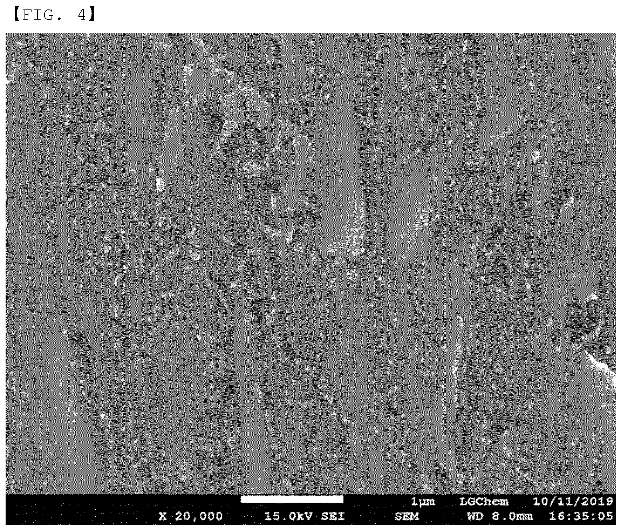

A negative electrode was manufactured using the same method as in Example 1 except that HAuCl₄ in the coating solution was changed to AgNO₃ in Example 1. A photograph of the surface of the negative electrode manufactured according to Example 3 is shown in FIG. 4.

### <Comparative Example 1>

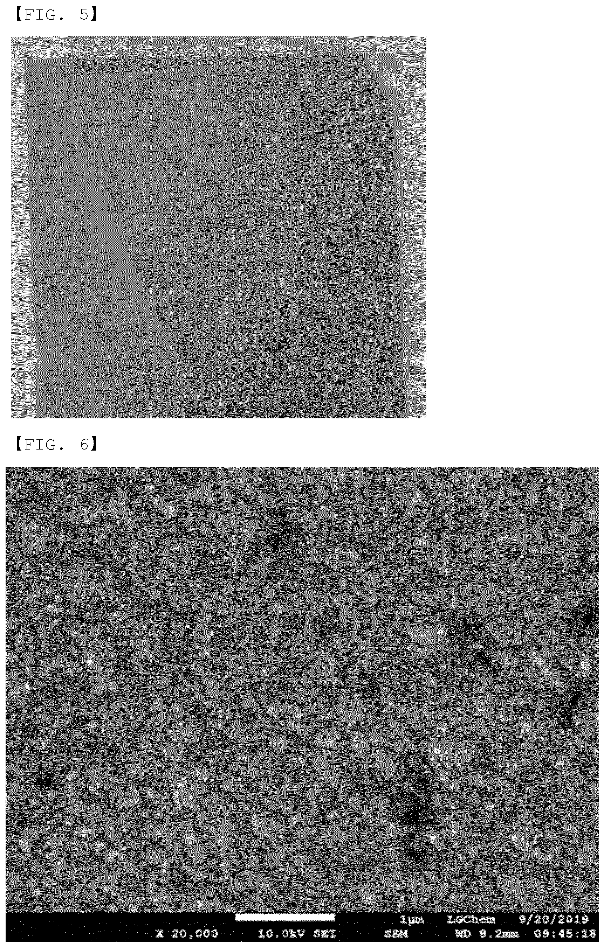

A copper current collector, the surface of which was coated with no lithiophilic material and which was not thermally treated, was prepared so as to be used as a negative electrode. A photograph of the surface of the negative electrode manufactured according to Comparative Example 1 is shown in FIG. 5, and a SEM photograph of the negative electrode is shown in FIG. 6.

### <Comparative Example 2>

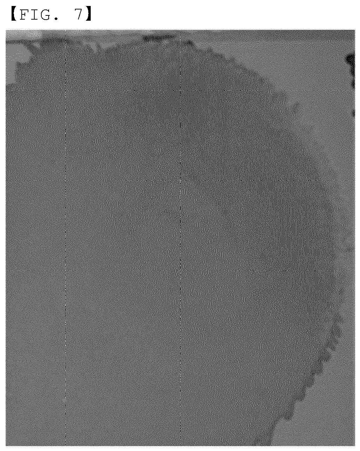

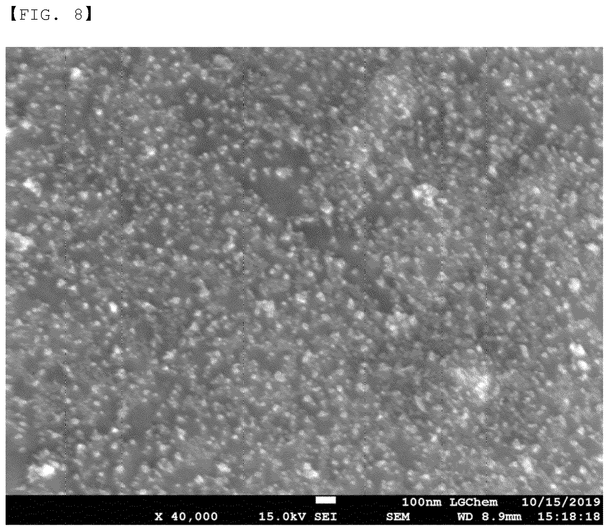

A negative electrode was manufactured using the same method as in Example 1 except that no heat treatment was performed in Example 1. A photograph of the surface of the negative electrode manufactured according to Comparative Example 2 is shown in FIG. 7, and a SEM photograph of the negative electrode is shown in FIG. 8.

### <Comparative Example 3>

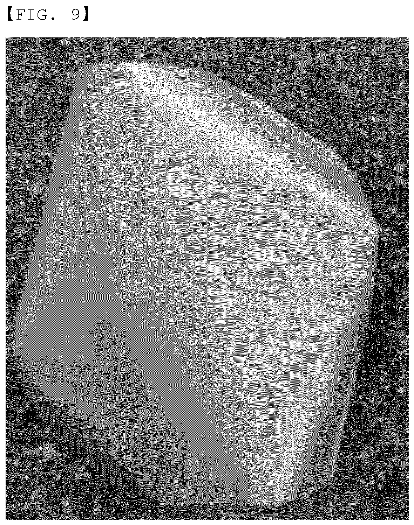

A copper current collector coated with no LPM was thermally treated at 300°C for 60 minutes to manufacture a negative electrode. A photograph of the surface of the negative electrode manufactured according to Comparative Example 3 is shown in FIG. 9.

### <Comparative Example 4>

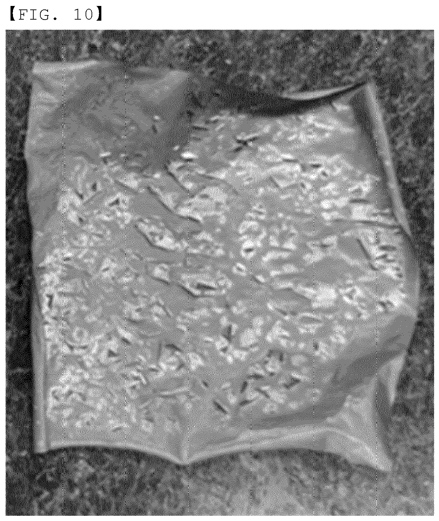

A copper current collector coated with no LPM was thermally treated at 300°C for 360 minutes to manufacture a negative electrode. A photograph of the surface of the negative electrode manufactured according to Comparative Example 4 is shown in FIG. 10.

### <Comparative Example 5>

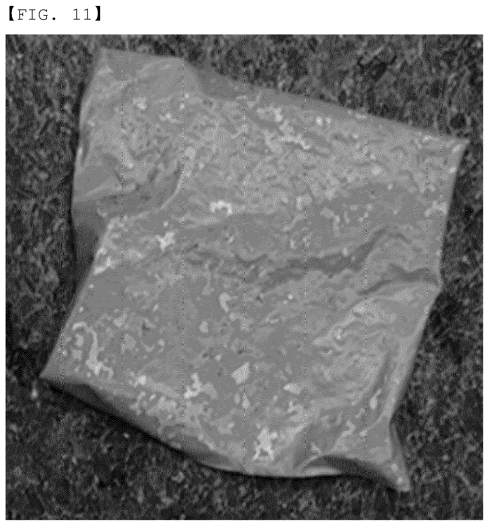

A negative electrode was manufactured using the same method as in Example 1 except that heat treatment time was lengthened from 60 minutes to 360 minutes in Example 1. A photograph of the surface of the negative electrode manufactured according to Comparative Example 5 is shown in FIG. 11.

Referring to FIGS. 1 to 11, when comparing FIGS. 5 and 6, which show the negative electrode manufactured according to Comparative Example 1, in which the copper current collector was not treated, and FIGS. 7 and 8, which show the negative electrode manufactured according to Comparative Example 2, in which the copper current collector was coated with the LPM, with each other, it can be seen that the surface of the negative electrode of FIG. 7 was coated with the LPM in a circular shape, and it can also be seen from the enlarged view that the surface of the negative electrode was coated with gold (Au).

Example 1 corresponds to Comparative Example 2 that was additionally thermally treated. When comparing FIGS. 1 and 2, which show the surface of the negative electrode manufactured according to Example 1, and FIGS. 7 and 8, which show the negative electrode manufactured according to Comparative Example 2, with each other, it can be seen that the LPM material formed on the surface of the negative electrode current collector by coating, i.e. gold, and the current collector were oxidized, whereby a color difference occurred in appearance.

Referring to FIG. 3, which is a SEM photograph of the negative electrode manufactured according to Example 2, it can be seen that the surface of the negative electrode current collector was coated with Pt in a dispersed state. However, Pt may be nonuniformly dispersed depending on the state of the surface of the negative electrode current collector.

However, an oxide layer is formed on the surface of the negative electrode current collector by oxidation, whereby the surface of the negative electrode current collector on which Pt is nonuniformly dispersed is reformed so as to be lithiophilic, and therefore it is possible to enlarge the portion of the negative electrode current collector on which lithium plating occurs.

Referring to FIG. 4, which is an SEM photograph of the negative electrode manufactured according to Example 3, it can be seen that the entirety of the surface of the negative electrode current collector was coated with Ag although Ag partially congregated due to the state of the surface of the negative electrode current collector, whereby Ag was oxidized together with the negative electrode current collector and thus was reformed.

Referring to FIG. 9, which shows the negative electrode manufactured according to Comparative Example 3, the outer periphery of the negative electrode current collector was further rolled than in the negative electrode manufactured according to Example 1, and the surface of the negative electrode current collector was oxidized by heat treatment.

Referring to FIG. 10, which shows the negative electrode manufactured according to Comparative Example 4, and FIG. 11, which shows the negative electrode manufactured according to Comparative Example 5, the oxidation time was too long, whereby the shape of each negative electrode was deformed, and the surface of each negative electrode was partially torn or peeled.

As described above, each of the negative electrodes manufactured according to Comparative Example 4 and Comparative Example 5 was in a state of not being used as the current collector, and therefore the following short-circuit occurrence experiments were not performed.

### Short-circuit occurrence experiments

Coin cells were manufactured using the negative electrodes manufactured according to Example 1 to Example 3 and Comparative Example 1 to Comparative Example 3.

In order to manufacture a slurry for positive electrode formation, NCM811, as a positive electrode active material, carbon, as a conductive agent, and polyvinylidene fluoride, as a binder, were mixed with each other in a weight ratio of 95:2:3.

The slurry for positive electrode formation was applied to an aluminum current collector so as to have a thickness of 20 um using a doctor blade and was then vacuum-dried at 120°C for 4 hours.

The aluminum current collector having the vacuum-dried slurry for positive electrode formation was rolled using a roll press to manufacture 3 mAh/cm² of a positive electrode.

In order to manufacture a liquid electrolyte, 1 M of LiPF₆, as lithium salt, 0.5 volume% of vinylene carbonate, and 1 volume% of fluoroethylene carbonate were added to a mixture of ethylene carbonate and ethyl methyl carbonate mixed with each other so as to have a volume ratio (volume%) of 3:7.

A coin cell was manufactured using the liquid electrolyte, the positive electrode, and the negative electrode. The number of charges and discharges at which short circuit occurred was measured while the coil cell was charged and discharged under the following conditions. The results are shown in Table 1 below.

Charging condition: constant current (CC)/constant voltage (CV), 4.25 V, 0.5 C, 0.1C current cut-off
Discharging condition: constant current (CC) condition 3V, 0.5C

The number of charges and discharges at which short circuit occurs means a point in time at which voltage is not increased but is maintained uniform or is decreased even though voltage does not reach cut-off voltage while lifespan evaluation is performed under the charging and discharging conditions.

**[Table 1]**

| | Cycle (Number of charges and discharges) |
|---|---|
| Example 1 | 28 |
| Example 2 | 21 |
| Example 3 | 25 |
| Comparative Example 1 | 3 |
| Comparative Example 2 | 15 |
| Comparative Example 3 | 8 |

Referring to Table 1 above, it can be seen that, in the case in which the negative electrode current collector is coated with the LPM and oxidized, short circuit does not easily occur.

In addition, it can be seen that, in the case in which no LPM coating is performed while no oxidation is performed, short circuit more easily occurs than in the case in which LPM coating is performed while no oxidation is performed and that, in the case in which the negative electrode current collector is oxidized while no LPM coating is performed on the negative electrode current collector (Comparative Example 3), short circuit more early occurs than in the case in which LPM coating is performed while no oxidation is performed (Comparative Example 2). Consequently, it can be seen that, in the case in the negative electrode current collector is coated with the LPM, rather than is oxidized, it is possible to increase the lifespan of a lithium secondary battery and to improve safety thereof.

In Comparative Example 4 and Comparative Example 5, the oxidation time was too long, whereby it was difficult to maintain the shape of each current collector, or the surface layer was separated, whereby use as the current collector was impossible.

In the case in which oxidation is performed at a high temperature of 300°C, therefore, it is preferable for oxidation to be performed for a shorter time than 360 minutes.

### [Industrial Applicability]

As is apparent from the above description, in a negative electrode for lithium secondary batteries including an oxidized current collector according to the present invention and a method of manufacturing the same, the entire surface of a negative electrode current collector is coated with a lithiophilic material in a dispersed state, whereby lithium plating may occur over the entire surface of the negative electrode current collector. Consequently, nucleation potential is lowered and a plurality of lithium nuclei may be formed.

In addition, since the lithiophilic material is widely distributed, a rate at which additional plating occurs on a plurality of lithium nuclei widely dispersed may be increased, compared to a rate at which a lithium nucleus grows on a specific region of the surface of the negative electrode current collector in a vertical direction. Consequently, it is possible to prevent local occurrence of lithium plating on the surface of the negative electrode current collector, thus preventing growth of lithium dendrites.

In addition, since the portion of the negative electrode current collector that is coated with no lithiophilic material is oxidized, the surface of the negative electrode current collector that is coated with no lithiophilic material is reformed so as to be lithiophilic. Consequently, it is possible to further inhibit local occurrence of lithium plating.

## Claims

1. A negative electrode for lithium secondary batteries, the negative electrode comprising:
a negative electrode current collector; and
a lithiophilic material (LPM) coated on at least one surface of the negative electrode current collector in a dispersed state,
wherein the lithiophilic material is an oxidized product of the coating material coated on the negative electrode current collector and comprises at least one of a metal or a metal oxide, and
an oxide layer is formed on a surface of the negative electrode current collector while the lithiophilic material is formed thereon,
wherein the coating material is at least one of: a metal salt comprising HAuCl₄, H₂PtCl₆, AgNO₂, AuCl, Aucl₃, K(AuCl₄), AuBr₃, PtCl₂, PtCl₄, AgCl, or AgCN; a metal comprising Au, Ag, or Pt; and
wherein the lithiophilic material is at least one of: a metal comprising Au, Ag, or Pt.

2. The negative electrode according to claim 1, wherein lithium plating (Li plating) occurs on a surface of the lithiophilic material.

3. The negative electrode according to claim 1, wherein the oxide layer is formed on a surface of the negative electrode current collector that is not coated with the lithiophilic material.

4. A method of manufacturing the negative electrode according to any one of claims 1 to 3, the method comprising:
1) preparing a negative electrode current collector;
2) coating at least one surface of the negative electrode current collector with a coating material in a dispersed state; and
3) oxidizing the negative electrode current collector and the coating material of step 2).

5. The method according to claim 4, wherein lithiophilicity of the coating material is increased by the oxidation.

6. The method according to claim 4, wherein the coating step is performed by immersing, spin coating, dip coating, spray coating, doctor blade coating, solution casting, drop coating, physical vapor deposition (PVD), or chemical vapor deposition (CVD).

7. The method according to claim 4, wherein the oxidation is performed through a heat treatment process at a temperature of 50°C to 500°C.

8. The method according to claim 7, wherein the oxidation is performed for 1 minute to 360 minutes.

9. An electrode assembly comprising the negative electrode according to any one of claims 1 to 3.

10. The electrode assembly according to claim 9, wherein the electrode assembly is:
a mono-cell in which a positive electrode, a separator, and a negative electrode are sequentially stacked; or
a bi-cell in which a negative electrode, a separator, a positive electrode, a separator, and a negative electrode are sequentially stacked.

## Patentansprüche

1. Negative Elektrode für Lithium-Sekundärbatterien, wobei die negative Elektrode umfasst:
einen Stromabnehmer der negativen Elektrode; und
ein lithophiles Material (LPM), das auf mindestens einer Oberfläche des Stromabnehmers der negativen Elektrode in einem dispergierten Zustand beschichtet ist,
wobei das lithophile Material ein oxidiertes Produkt des Beschichtungsmaterials ist, das auf den Stromabnehmer der negativen Elektrode beschichtet ist, und mindestens eines von einem Metall oder einem Metalloxid umfasst, und
eine Oxidschicht auf einer Oberfläche des Stromabnehmers der negativen Elektrode gebildet ist, während das lithophile Material darauf gebildet ist,
wobei das Beschichtungsmaterial mindestens eines ist von: einem Metallsalz, das HAuCl₄, H₂PtCl₆, AgNO₃, AuCl, Aucl₃, K(AuCl₄), AuBr₃, PtCl₂, PtCl₄, AgCl oder AgCN umfasst; einem Metall, das Au, Ag oder Pt umfasst; und
wobei das lithophile Material mindestens eines ist von: einem Metall, das Au, Ag oder Pt umfasst.

2. Negative Elektrode nach Anspruch 1, bei der Lithiumplattierung (Li-Plattierung) auf einer Oberfläche des lithophilen Materials auftritt.

3. Negative Elektrode nach Anspruch 1, bei der die Oxidschicht auf einer Oberfläche des Stromabnehmers der negativen Elektrode gebildet ist, die nicht mit dem lithophilen Material beschichtet ist.

4. Verfahren zur Herstellung der negativen Elektrode nach einem der Ansprüche 1 bis 3, wobei das Verfahren umfasst:
1) Herstellen eines Stromabnehmers der negativen Elektrode;
2) Beschichten mindestens einer Oberfläche des Stromabnehmers der negativen Elektrode mit einem Beschichtungsmaterial in einem dispergierten Zustand; und
3) Oxidieren des Stromabnehmers der negativen Elektrode und des Beschichtungsmaterials aus Schritt 2).

5. Verfahren nach Anspruch 4, bei dem die Lithophilität des Beschichtungsmaterials durch die Oxidation erhöht wird.

6. Verfahren nach Anspruch 4, bei dem der Beschichtungsschritt durch Eintauchen, Rotationsbeschichten, Tauchbeschichten, Sprühbeschichten, Rakelbeschichten, Lösungsgießen, Tropfenbeschichten, physikalische Gasphasenabscheidung (PVD) oder chemische Gasphasenabscheidung (CVD) durchgeführt wird.

7. Verfahren nach Anspruch 4, bei dem die Oxidation durch einen Wärmebehandlungsprozess bei einer Temperatur von 50 °C bis 500 °C durchgeführt wird.

8. Verfahren nach Anspruch 7, bei dem die Oxidation für 1 Minute bis 360 Minuten durchgeführt wird.

9. Elektrodenanordnung, umfassend die negative Elektrode nach einem der Ansprüche 1 bis 3.

10. Elektrodenanordnung nach Anspruch 9, wobei die Elektrodenanordnung ist:
eine Monozelle, in der eine positive Elektrode, ein Separator und eine negative Elektrode sequenziell gestapelt sind; oder
eine Bizelle, in der eine negative Elektrode, ein Separator, eine positive Elektrode, ein Separator und eine negative Elektrode sequenziell gestapelt sind.

## Revendications

1. Électrode négative pour batteries secondaires au lithium, l'électrode négative comprenant :
un collecteur de courant d'électrode négative ; et
une matière lithiophile (LPM) enrobée sur au moins une surface du collecteur de courant d'électrode négative à l'état dispersé,
la matière lithiophile étant un produit oxydé du matériau de revêtement enrobé sur le collecteur de courant d'électrode négative, et comprenant au moins un d'un métal ou d'un oxyde métallique, et
une couche d'oxyde étant formée sur une surface du collecteur de courant d'électrode négative pendant la formation de la matière lithiophile sur celle-ci,
le matériau de revêtement étant au moins un des suivants : un sel métallique comprenant : HAuCl₄, H₂PtCl₆, AgNO₃, AuCl, Aucl₃, K(AuCl₄), AuBr₃, PtCl₂, PtCl₄, AgCl, or AgCN ; un métal comprenant Au, Ag ou Pt ; et
la matière lithiophile étant au moins un des suivants : un métal comprenant Au, Ag ou Pt.

2. Électrode négative selon la revendication 1, un dépôt de lithium (dépôt de Li) survenant sur une surface de la matière lithiophile.

3. Électrode négative selon la revendication 1, la couche d'oxyde étant formée sur une surface du collecteur de courant d'électrode négative qui n'est pas enrobé de matière lithiophile.

4. Procédé de fabrication de l'électrode négative selon une quelconque des revendications 1 à 3, le procédé comprenant :
1) la préparation d'un collecteur de courant d'électrode négative ;
2) le revêtement de l'au moins une surface du collecteur de courant d'électrode négative avec un matériau de revêtement à l'état dispersé ; et
3) l'oxydation du collecteur de courant d'électrode négative et du matériau de revêtement de l'étape 2).

5. Procédé selon la revendication 4, la lithiophilicité du matériau de revêtement étant amplifiée par l'oxydation.

6. Procédé selon la revendication 4, l'étape de revêtement étant effectuée par immersion, application par centrifugation, revêtement au trempé, revêtement par pulvérisation, application par raclage, coulée en solution, dépôt à la goutte, dépôt physique en phase vapeur (PVD), ou dépôt chimique en phase vapeur (CVD).

7. Procédé selon la revendication 4, l'étape de revêtement étant effectuée par le biais d'un traitement thermique à une température comprise entre 50°C et 500°C.

8. Procédé selon la revendication 7, la durée de l'oxydation étant effectuée pendant 1 à 360 minutes.

9. Ensemble d'électrode comprenant l'électrode négative selon une quelconque des revendications 1 à 3.

10. Ensemble d'électrode selon la revendication 9, l'ensemble d'électrode étant :
une mono-cellule dans laquelle une électrode positive, un séparateur, et une électrode négative sont empilées de façon séquentielle ; ou
une cellule bipolaire dans laquelle une électrode négative, un séparateur, une électrode positive, un séparateur, et une électrode négative sont empilées de façon séquentielle.
